# EUROPÄISCHE PATENTANMELDUNG

(11) **EP 1 225 703 A1**
(43) Veröffentlichungstag der Anmeldung: **24.07.2002**
(21) Anmeldenummer: 01101276.2
(22) Anmeldetag: 19.01.2001
(51) Int. Cl.: H03M 7/00, H04L 29/00

(54) **Verfahren zum ressourcensparenden Transport von Anwenderinformation als Sprach-,Musik-, und Ton-Meldungen in Kommunikationssystemen**

(71) Anmelder: SIEMENS AKTIENGESELLSCHAFT, 80333 München (DE)
(72) Erfinder: Wimmreuter, Wilhelm, 81543 München (DE)

(57) **Zusammenfassung**

Verfahren zum resourcensparenden Transport von Anwenderinformation als Sprach-, Musik-, und Ton-Meldungen in Kommunikatiohssystemen Traditionelle Telefonsysteme reservieren Ressourcen zur Übertragung von Sprachinformation für die gesamte Dauer der Anhörung dieser Information. Gemäß der Erfidnung wird Sprachinformation als Block übertragen und von den Endgeräten für den Nutzer abgespielt. Dadurch können Ressourcen im Netz schneller freigegeben werden.

## Beschreibung

1. Welches technische Problem soll durch Ihre Erfindung gelöst werden?
2. Wie wurde dieses Problem bisher gelöst?
3. In welcher Weise löst Ihre Erfindung das angegebene technische Problem ?
4. Worin liegen Vorteile der Erfindung ?
5. Ausführungsbeispiel[e] der Erfindung.

### Zu 1.) Welches technische Problem soll durch Ihre Erfindung gelöst werden?

Hoher Ressourcenverbrauch bei Information eines Kommunikationsdienstnutzers durch Sprach-, Musik-, Film-, und Tonelemente. Dies trifft im allgemeinen bei Infotönen, Informationsansagen und kostenpflichtigen Informations-Services zu.

### Zu 2.) Wie wurde das Problem bisher gelöst?

Traditionelle Telefonsysteme (Mobilnetz- oder Festnetzsysteme) und Paket / IP basierte Telefon-, Konferenz- und Sprachvermittlungssysteme reservieren Ressourcen zur Informationsübertragung (z.b. Leitungen, Kommunikationssysteme oder Paketdatenströme) für die gesamte Dauer der Anhörung dieser Information. Diese Kommunikationsbeziehung bleibt bis zum Ende der Anhörung reserviert und wird i.d.R. nur durch den Nutzer oder einer Zeitüberwachung bei unerwartet langer Anhördauer beendet.
Das Verfahren hat den zusätzlichen Nachteil, dass die Kommunikationskanäle bereits vor dem eigentlichen Begin der gebührenpflichtigen Kommunikation geschaltet werden müssen und daher gesonderte Maßnahmen zur Verhinderung von Missbrauch nötig sind.

### Zu 3.) In welcher Weise löst Ihre Erfindung das angegebene technische Problem ?

Bei ausreichender Intelligenz von Endgeräten oder diesen Endgeräten naheliegenden Zugangsnetzelementen kann Information der genannten Art als Block übertragen und von den Endgeräten oder Zugangselementen für den Nutzer abgespielt werden. Dadurch können Ressourcen im Netz schneller freigegeben und bereits während der Anhördauer durch den Nutzer für weitere Kommunikationswünsche anderer Nutzer verkauft/genutzt werden.

### Zu 4.) Worin liegen Vorteile der Erfindung?

Mit Einsatz des Verfahrens für Mobilfunk / Mobiltelefonie kann bei für einen Nutzer (Anwender) bestimmten Ansagen und/oder Toninformationen die Funkschnittstelle als einer der am engsten bemessenen Ressourcen bereits wahrend der Anhördauer wieder freigegeben und für neue Verbindungen genutzt werden.

Einmalige Übertragung eines kompakten Informationspaketes, anstatt dauerhafter Reservierung einer echtzeit- Kommunikationsbeziehung.

Komprimierungstechniken erlauben es Sprach-, Musik- und Ton-Information in einem Bruchteil des für Echtzeitübertragung nötigen Volumens zu übertragen.

Paketbasierte Kommunikationssysteme können mit dieser Methode Sprachinformationen an den Nutzer senden, bevor die in der Regel sehr aufwendige Freischaltung einer Firewall erfolgt ist.

Dabei entfällt die für Voice-over-IP nötige Freischaltung eines UDP Rück-Kanals über z.b. eine "H.323 aware Firewall". Das spart Ressourcen und erhöht die an Netzwerkgrenzen nötige Sicherheit.

Die allgemeine Tendenz zur Migration von Netzwerkintelligenz in das Endgerät wird unterstützt und spart Kosten beim Betreiber.

Die Erfindung ist bei Verwendung entsprechender Peripherie sowohl für Paket / IP basierte Netze als auch für Traditionelle Telefonsysteme anwendbar.

Das Verfahren ist transparent und kann heute übliche Übertragungsverfahren und Multimedia komprimier / Kodier-Verfahren nutzen.
z. B. Übertragung über ISDN, Internet und Kodier- und Komprimier- Verfahren wie MP3, WAV, MPEG usw.

### Zu 5.) Ausführungsbeispiel[e] der Erfindung.

### Realisierung:

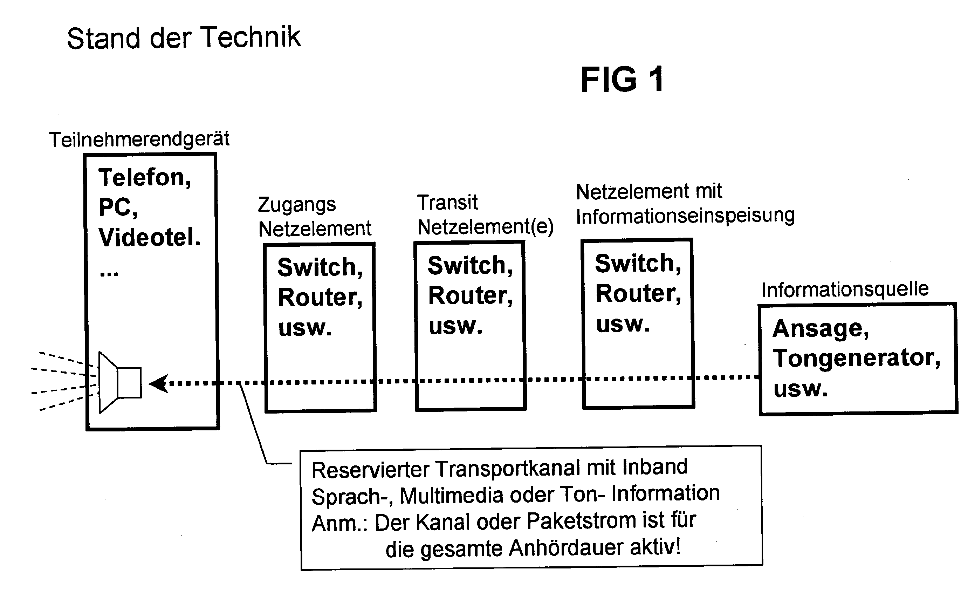

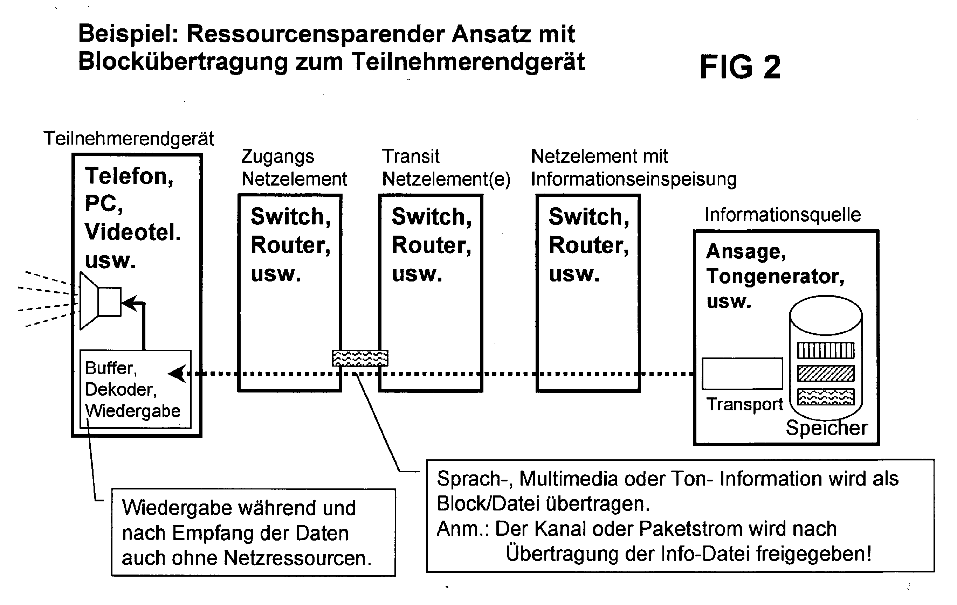

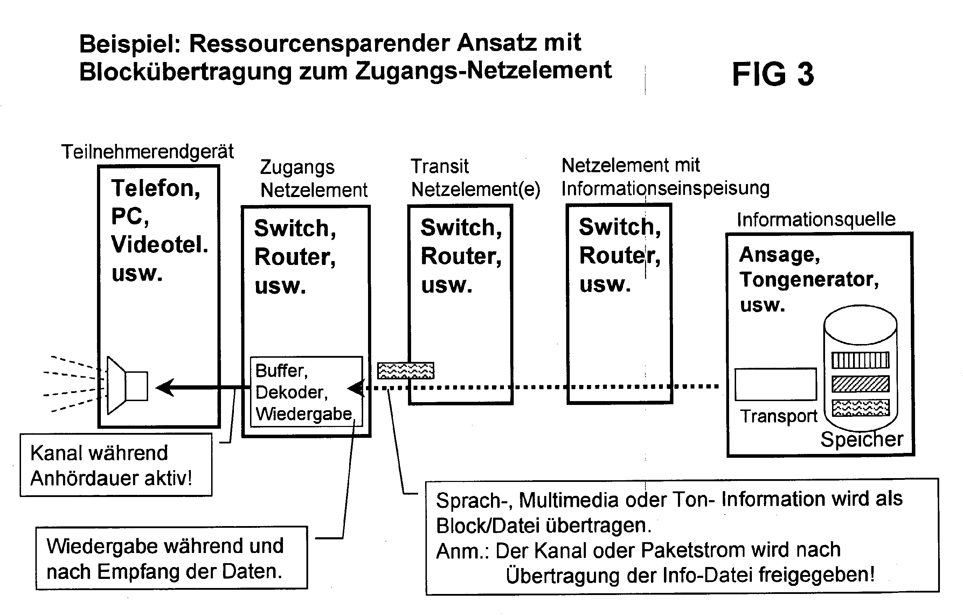

Statt der heute üblichen Ansage oder Tonquellen (siehe Fig. 1), welche in einen Echtzeitdatenstrom eingespeist werden, wird eine Datenquelle mit komprimierten Sprach-, Musikund/oder Tondateien verwendet. Diese Dateien werden als kompakte Einheit (z.B. Datei, Block Stream) an das Endgerät beim Kunden (siehe Fig. 2) oder einen dem Kunden naheliegenden Access-Server ( siehe Fig. 3) transportiert. Diese Informationspakete enthalten optional Informationen zur automatischen Wiederholung und gegebenenfalls Limitierungsinformation der Anhördauer. Das Endgerät oder der Access-Server kann diese Information speichern, entpacken und dem Anwender über Lautsprecher oder Hörergarnitur wiedergeben.

### Anwendung:

Mit zunehmender Intelligenz der Teilnehmerendgeräte und mit Einführung der IP-basierten Sprach- und Multimedia-Kommunikation beherrschen immer mehr Endgeräte die Dekodierung derartiger Information und können so zur Entlastung der Kommunikationsnetze beitragen.

## Patentansprüche

1. Verfahren zur Reduzierung des Ressourcenverbrauchs von Kommunikationsnetzen für Kommunikationsdienste,
**dadurch gekennzeichnet,**
**dass** Nutzer-Informationen im Rahmen eines Dienstes als Block zu den Endgeräten oder Dienst-Zugangselementen des Nutzers übertragen werden und von diesen selbst für den Nutzer wiedergegeben werden.
